(19) Europäisches Patentamt
European Patent Office
Office européen des brevets

(11) EP 2 931 404 B1

(12) # FASCICULE DE BREVET EUROPEEN

(45) Date de publication et mention de la délivrance du brevet:
**14.11.2018 Bulletin 2018/46**

(21) Numéro de dépôt: **13812017.5**

(22) Date de dépôt: **05.12.2013**

(51) Int Cl.:
***B01D 53/14*** (2006.01)

(86) Numéro de dépôt international:
**PCT/FR2013/052960**

(87) Numéro de publication internationale:
**WO 2014/091121 (19.06.2014 Gazette 2014/25)**

(54) **PROCÉDÉ D'ABSORPTION SÉLECTIVE DU SULFURE D'HYDROGÈNE D'UN EFFLUENT GAZEUX PAR UNE SOLUTION ABSORBANTE A BASE DE 1,2-BIS(DIMETHYLAMINOETHOXYETHANE), COMPRENANT UN AGENT VISCOSIFIANT**

VERFAHREN ZUR SELEKTIVEN ABSORPTION VON SCHWEFELWASSERSTOFF AUS EINEM GASSTROM MITTELS EINER ABSORPTIONSLÖSUNG, DIE AUF 1,2-BIS (DIMETHYLAMINOETHOXYETHAN) BASIERT UND EIN ADDITIV ZUR ERHÖHUNG DER VISKOSITÄT ENTHÄLT

METHOD FOR SELECTIVELY ABSORBING HYDROGEN SULPHIDE FROM A GASEOUS EFFLUENT BY MEANS OF AN ABSORBING SOLUTION ON THE BASIS OF 1,2-BIS (DIMETHYLAMINOETHOXYETHANE) COMPRISING A VISCOSITY ENHANCER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2012 FR 1203400**

(43) Date de publication de la demande:
**21.10.2015 Bulletin 2015/43**

(73) Titulaire: **IFP Energies nouvelles**
**92500 Rueil-Malmaison (FR)**

(72) Inventeurs:
- **GRANDJEAN, Julien**
  **F-69008 Lyon (FR)**
- **LE PENNEC, Dominique**
  **F-78910 Orgerus (FR)**
- **DELFORT, Bruno**
  **F-75005 Paris (FR)**

(74) Mandataire: **IFP Energies nouvelles**
**Rond-point de l'échangeur de Solaize**
**BP3**
**69230 Solaize (FR)**

(56) Documents cités:
**EP-A1- 0 087 856**

- **LAMMERS J N J J ET AL: "Effect of polyhydroxyalcohols on COS absorption in aqueous methyldiethanolamine", THE CHEMICAL ENGINEERING JOURNAL AND THE BIOCHEMICAL ENGINEERINGJOURNAL, ELSEVIER, vol. 60, no. 1-3, 1 décembre 1995 (1995-12-01), pages 123-129, XP027206534, ISSN: 0923-0467 [extrait le 1995-12-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne le domaine des procédés de désacidification d'un effluent gazeux. L'invention s'applique avantageusement au traitement de gaz d'origine industrielle et du gaz naturel.

On utilise couramment des procédés d'absorption mettant en oeuvre une solution aqueuse d'amines pour retirer les composés acides, notamment le $CO_2$, l'$H_2S$, le COS, le $CS_2$, le $SO_2$ et les mercaptans, présents dans un gaz. Le gaz est désacidifié par mise en contact avec la solution absorbante dans une colonne d'absorption ("absorbeur"), puis la solution absorbante est régénérée thermiquement dans une colonne de régénération ("régénérateur"). Un gaz appauvri en composés acides est alors produit dans l'absorbeur, et un gaz riche en composés acides sort du régénérateur. Par exemple le document US 6,852,144 décrit une méthode d'élimination des composés acides des hydrocarbures. La méthode utilise une solution absorbante eau-N-méthyldiéthanolamine ou eau-triéthanolamine contenant une forte proportion d'un composé appartenant au groupe suivant : pipérazine et/ou méthylpipérazine et/ou morpholine.

Une limitation des solutions absorbantes couramment utilisées dans des applications de désacidification est une sélectivité insuffisante d'absorption du sulfure d'hydrogène ($H_2S$) par rapport au dioxyde de carbone($CO_2$). En effet, dans certains cas de désacidification du gaz naturel, on recherche une élimination sélective de l'$H_2S$ en limitant au maximum l'absorption du $CO_2$. Cette contrainte est particulièrement importante pour des gaz à traiter contenant déjà une teneur en $CO_2$ inférieure ou égale à la spécification désirée. On recherche alors une capacité d'absorption de l'$H_2S$ maximale avec une sélectivité maximale d'absorption de $H_2S$ vis-à-vis du $CO_2$. Cette sélectivité permet de récupérer un gaz acide en sortie de régénérateur ayant une concentration la plus élevée possible en $H_2S$, ce qui limite la taille des unités de la chaîne soufre en aval du traitement et garantit un meilleur fonctionnement. Dans certains cas, une unité d'enrichissement en $H_2S$ est nécessaire pour concentrer en $H_2S$ le gaz acide. Dans ce cas, on recherche également la solution absorbante la plus sélective possible. Les unités de traitement de gaz de queue requièrent également une élimination sélective de l'$H_2S$, qui est renvoyé en amont de la chaîne soufre.

Il est bien connu de l'homme du métier que les amines tertiaires ou les amines secondaires avec un encombrement stérique sévère ont une cinétique de captage du $CO_2$ plus lente que des amines primaires ou les amines secondaires peu encombrées. En revanche, les amines tertiaires ou les amines secondaires avec un encombrement stérique sévère ont une cinétique de captage de l'$H_2S$ instantanée, ce qui permet de réaliser une élimination sélective de l'$H_2S$ basée sur des performances cinétiques distinctes.

En 1950, Frazier et Kohl (Ind. and Eng. Chem., 42, 2288) ont notamment montré que l'amine tertiaire qu'est la N-méthyldiéthanolamine (MDEA) présente un haut degré de sélectivité d'absorption de l'$H_2S$ par rapport au $CO_2$, en raison des performances cinétiques distinctes de cette amine sur ces deux gaz. Cependant, il existe des cas où l'utilisation de la MDEA ne permet pas d'atteindre la capacité d'absorption d'$H_2S$ désirée et présente une sélectivité insuffisante. Ainsi, l'utilisation de la MDEA pour traiter des gaz contenant des pressions partielles élevées en $CO_2$ et $H_2S$, comme c'est par exemple le cas pour certains gaz naturels, présente un intérêt limité. Il en va de même quand il s'agit de réduire les teneurs en $H_2S$ à des faibles pressions partielles, par exemple dans le cadre de traitement de gaz de queue de raffinerie ou des gaz de synthèse.

Le brevet US 4,405,581 divulgue l'utilisation de solutions absorbantes à base d'amines secondaires encombrées pour l'élimination sélective de l'$H_2S$ en présence de $CO_2$. Pour la même utilisation, le brevet US 4,405,582 (EP0087856) divulgue l'utilisation de solutions absorbantes à base de diaminoéthers où au moins une fonction amine est tertiaire. Le brevet US 4,483,833 divulgue l'utilisation d'aminoalcool et d'aminoétheralcools tertiaires hétérocycliques pour éliminer l'$H_2S$ d'un mélange gazeux comprenant de l'$H_2S$ et du $CO_2$. L'ensemble de ces brevets décrit des performances améliorées en termes de sélectivité et de capacité par rapport à la N-méthyldiéthanolamine.

L'article de Lammers et al., 1995 (Effets of polyhydroxyalcohols on COS absorption in aqueous MDEA, The Chemical Engineering Journal 60 - 1995, pp.123-29) divulgue de l'ajout d'un polyhydroxyalcool (PHA) tel que l'éthylèneglycol ou le glycérol dans une solution de MDEA, et son effet sur l'absorption du COS dans le cadre de la désacidification de gaz.

Les inventeurs ont découvert que l'addition de certains composés organiques, notamment ajoutés en très faibles quantités, à une formulation comprenant de l'eau et au moins une amine tertiaire ou secondaire encombrée permet de contrôler la sélectivité de l'absorption lors de l'absorption sélective de l'$H_2S$ par rapport au $CO_2$ d'un effluent gazeux comprenant de l'$H_2S$ et du $CO_2$. Ledit composé organique, en augmentant la viscosité dynamique de la solution aqueuse de manière contrôlée, permet d'améliorer la sélectivité d'absorption de l'$H_2S$ vis-à-vis du $CO_2$. On désigne un tel composé sous l'expression "composé viscosifiant" dans la présente description.

Les inventeurs ont par ailleurs découvert que les amines tertiaires et secondaires encombrées en général et les diaminoéthers tertiaires en particulier ne sont pas équivalents en termes de performance pour leur usage dans des formulations absorbantes contenant un composé viscosifiant permettant de réaliser de manière contrôlée l'absorption sélective de l'efficacité de l'$H_2S$ vis-à-vis du $CO_2$. De manière inattendue, les formulations de 1,2-bis-(2-diméthylaminoéthoxy)-éthane contenant un composé viscosifiant se distinguent par une amélioration de la sélectivité d'absorption

de l'$H_2S$ par rapport au $CO_2$, en comparaison avec des formulations de méthyldiéthanolamine ou d'autres amines tertiaires et secondaires encombrées contenant le même composé viscosifiant. Cette comparaison peut être réalisée par exemple en augmentant d'un même facteur multiplicatif la viscosité des différentes solutions d'amine par ajustement de la concentration en viscosifiant, par exemple en ajustant dans chaque formulation la quantité de composé viscosifiant pour augmenter de 40% la viscosité de chaque solution d'amine.

Ainsi, l'objet de l'invention concerne un procédé d'élimination sélective du sulfure d'hydrogène contenu dans un effluent gazeux comprenant du $CO_2$, dans lequel on effectue une étape d'absorption sélective du sulfure d'hydrogène par rapport au $CO_2$ en mettant en contact ledit effluent avec une solution comprenant (a) de l'eau et (b) au moins le 1,2-bis-(2-diméthylaminoéthoxy)-éthane , et dans lequel on contrôle la sélectivité de l'absorption du sulfure d'hydrogène par rapport au $CO_2$ en ajoutant une quantité égale à moins de 20 % en poids de la solution absorbante d'un composé viscosifiant (c) à la solution absorbante, de manière à augmenter la viscosité dynamique de la solution absorbante d'au moins 20 % par rapport à une même solution absorbante sans ledit composé viscosifiant, ladite quantité du composé viscosifiant (c) étant ajustée afin d'obtenir la sélectivité souhaitée, ledit composé viscosifiant (c) étant choisi dans le groupe constitué par les polyéthers et leurs copolymères.

On peut contrôler la sélectivité de l'absorption du sulfure d'hydrogène par rapport au $CO_2$ en ajoutant moins de 5 % en poids, plus préférentiellement moins de 1 % en poids, encore plus préférentiellement moins de 0,3 % en poids, d'un composé viscosifiant à la solution absorbante de manière à augmenter la viscosité dynamique de la solution absorbante d'au moins 20 %, de préférence d'au moins 40 %, plus préférentiellement d'au moins 80 %, par rapport à une même solution absorbante sans ledit composé viscosifiant.

Selon encore un autre mode de réalisation, le composé viscosifiant est un polyéthylèneglycol.

Selon l'invention, la solution absorbante peut comprendre entre 10 % et 90 % en poids de 1,2-bis-(2-diméthylaminoéthoxy)-éthane (b), entre 10 % et 90 % en poids d'eau (a), et entre 0,01 % en poids et 20 % en poids du composé viscosifiant (c).

Selon un mode de réalisation, la solution peut comporter une amine supplémentaire, ladite amine supplémentaire étant une amine tertiaire, telle que la méthyldiéthanolamine, ou une amine secondaire présentant deux carbones tertiaires en alpha de l'azote de la fonction amine secondaire, ou une amine secondaire présentant au moins un carbone quaternaire en alpha de l'azote de la fonction amine secondaire. Dans ce cas, la solution peut comporter entre 10% et 90% poids de ladite amine supplémentaire, de préférence entre 10% et 50% poids, de manière très préférée entre 10% et 30% poids.

La solution absorbante peut comprendre, en outre, un solvant physique choisi parmi le méthanol et le sulfolane.

Selon l'invention, l'étape d'absorption sélective peut être réalisée à une pression comprise entre 1 bar et 120 bars, et à une température comprise entre 20°C et 100°C.

Après l'étape d'absorption, on peut obtenir un effluent gazeux appauvri en composés acides et une solution absorbante en composés acides, et dans lequel on effectue au moins une étape de régénération de la solution absorbante chargée en composés acides.

L'étape de régénération peut être réalisée à une pression comprise entre 1 bar et 10 bar et une température comprise entre 100°C et 180°C.

L'effluent gazeux peut être choisi parmi le gaz naturel, les gaz de synthèse, les gaz de raffinerie, les gaz acides issus d'une unité aux amines, les gaz issus d'une unité de réduction en queue du procédé Claus, les gaz de fermentation de biomasse, les gaz de cimenterie.

Selon un mode de réalisation de l'invention, l'effluent gazeux est du gaz naturel ou un gaz de synthèse.

D'autres caractéristiques et avantages de l'invention seront mieux compris et apparaîtront clairement à la lecture de la description faite, ci-après, en se référant aux figures annexées et décrites ci-après.

- La figure 1 représente un schéma de principe d'un procédé de traitement d'effluents gazeux comprenant des composés acides utilisant une solution absorbante à base d'amines, illustrant notamment le procédé selon l'invention.
- La figure 2 illustre de manière non exhaustive des voies de synthèse de la 1,2-bis(2-diméthylaminoéthoxy)éthane.

Dans la présente description, on entend par "amine tertiaire" toute molécule comportant une ou plusieurs fonctions amines et dont toutes les fonctions amines sont tertiaires.

Dans la présente description, on entend par "amine secondaire encombrée" toute molécule comportant une ou plusieurs fonctions amines et dont les fonctions amines sont tertiaires ou secondaires encombrées, l'une au moins étant secondaire encombrée.

Par "encombrement" de la fonction amine secondaire, on entend soit la présence d'au moins un carbone quaternaire en alpha de l'azote de la fonction amine secondaire, soit la présence de deux carbones tertiaires en position $\alpha$ et $\alpha'$.

Procédé d'élimination sélective de l'$H_2S$ d'effluent gazeux contenant du $CO_2$

Le procédé d'élimination sélective de l'$H_2S$ d'un effluent gazeux contenant du $CO_2$ comprend une étape d'absorption des composés acides que sont l'$H_2S$ et le $CO_2$ par mise en contact de l'effluent gazeux avec une solution absorbante selon l'invention.

En référence à la figure 1, l'étape d'absorption consiste à mettre en contact l'effluent gazeux 1 avec la solution absorbante 4. L'effluent gazeux 1 est introduit en fond de C1, la solution absorbante est introduite en tête de C1. La colonne C1 est munie de moyen de mise en contact entre gaz et liquide, par exemple un garnissage vrac, un garnissage structuré ou des plateaux de distillation. Lors du contact, les fonctions amines des molécules de la solution absorbante réagissent avec les composés acides contenus dans l'effluent, de manière à obtenir un effluent gazeux appauvri en composés acides 2, notamment appauvri en $H_2S$ et $CO_2$, et évacué en tête de C1, et une solution absorbante enrichie en ces mêmes composés acides 3 évacuée en fond de colonne C1, pour être de préférence régénérée.

L'étape d'absorption sélective de l'$H_2S$ peut être réalisée à une pression dans la colonne d'absorption C1 comprise entre 1 bar et 120 bar, de préférence entre 20 bar et 100 bar pour le traitement d'un gaz naturel, de préférence entre 1 bar et 3 bar pour le traitement des fumées industrielles, et à une température dans la colonne d'absorption C1 comprise entre 20°C et 100°C, préférentiellement comprise entre 30°C et 90°C, voire entre 30 et 60°C.

La sélectivité de l'absorption de l'$H_2S$ relativement au $CO_2$ est contrôlée par l'ajout d'une quantité d'un composé viscosifiant dans la solution absorbante mise en contact avec l'effluent gazeux. Le composé viscosifiant permet d'augmenter d'au moins 20 %, de préférence d'au moins 40 % et encore de préférence d'au moins 80 % la viscosité dynamique d'une solution aqueuse d'amine tertiaire ou secondaire encombrée, à une concentration d'amine et à une température donnée, la concentration du composé viscosifiant étant inférieure à 20 % en poids de la solution absorbante, de manière préférée inférieure à 5 % en poids, de manière plus préférée inférieure à 1 % en poids, de manière encore plus préférée inférieure à 0,3 % en poids. Une augmentation de viscosité dynamique d'au moins 20% peut être atteinte avec moins de 20 % en poids de la solution absorbante, de manière préférée inférieure à 5 % en poids, de manière plus préférée inférieure à 1 % en poids, de manière encore plus préférée inférieure à 0,3 % en poids. Il en est de même avec une augmentation de viscosité dynamique d'au moins 40 % et d'au moins 80 %, qui peuvent chacune être atteinte avec moins de 20 % en poids de la solution absorbante, de manière préférée inférieure à 5 % en poids, de manière plus préférée inférieure à 1 % en poids, de manière encore plus préférée inférieure à 0,3 % en poids.

On contrôle la sélectivité de l'absorption de l'$H_2S$ en ajustant la quantité de composé viscosifiant ajouté dans la solution absorbante de manière à obtenir la sélectivité souhaitée pour un gaz donné traité par un équipement déterminé.

Pour cela, un simulateur de procédé permet de déterminer la viscosité dynamique de la solution régénérée qu'il faut atteindre pour augmenter la sélectivité de manière à atteindre selon la composition du gaz brut soit la spécification limite pour le $CO_2$, généralement de 2%, soit une valeur approchant au plus près de cette valeur compte tenu de la limite maximale de viscosité admissible pour le procédé. Une fois déterminée, la viscosité de la solution régénérée sera ajustée par un appoint approprié d'une quantité déterminée d'un composé viscosifiant selon l'invention.

L'utilisation d'un composé viscosifiant selon l'invention, ajouté à la solution aqueuse comprenant la 1,2-bis-(2-diméthylaminoéthoxy)-éthane selon l'invention permet d'obtenir une sélectivité d'absorption de l'$H_2S$ vis-à-vis du $CO_2$ plus importante que celle atteinte avec des solutions de la même amine mais sans le composé viscosifiant. L'augmentation de la viscosité dynamique engendrée par l'ajout du composé viscosifiant selon l'invention a pour effet de diminuer l'absorption du $CO_2$ relativement à celle de l'$H_2S$.

L'utilisation de la formulation selon l'invention, comprenant la 1,2-bis-(2-diméthylaminoéthoxy)-éthane en mélange avec le composé viscosifiant permet également d'obtenir une sélectivité d'absorption de l'$H_2S$ vis-à-vis du $CO_2$ plus importante que celle atteinte avec des solutions utilisant le même viscosifiant ayant un effet comparable sur l'augmentation de viscosité, mais en mélange avec d'autres amines tertiaires ou secondaires encombrées.

La réduction de l'absorption du $CO_2$, en provoquant la baisse du taux de charge en $CO_2$ dans l'absorbeur, permet en outre de déplacer l'équilibre thermodynamique gaz-liquide en faveur de l'absorption de l'$H_2S$. Dans les mises en oeuvre où la cinétique d'absorption de l'$H_2S$ est peu impactée par l'augmentation de la viscosité de la phase liquide, par exemple sur une colonne à plateaux, il est possible de réduire la hauteur de la colonne d'absorption nécessaire pour atteindre une spécification en $H_2S$ donnée en tête d'absorbeur. En effet, cette colonne d'absorption étant classiquement dimensionnée en fonction de la spécification en $H_2S$ recherchée, il est possible de réduire sa hauteur si, pour une même spécification en $H_2S$ souhaitée, l'absorption en $H_2S$ dans la colonne est plus grande. Cet équipement sous pression représente une part importante des coûts d'investissement du procédé, qui peuvent ainsi être avantageusement réduits.

Dans tous les cas, l'augmentation contrôlée de la viscosité dynamique de la solution absorbante permet une amélioration notable de la sélectivité d'absorption de l'$H_2S$ vis-à-vis du $CO_2$.

L'étape d'absorption peut être suivie d'une étape de régénération de la solution absorbante enrichie en composés acides, par exemple tel que représenté schématiquement sur la figure 1.

L'étape de régénération consiste notamment à chauffer et, éventuellement à détendre, la solution absorbante

enrichie en composés acides afin de libérer les composés acides sous forme gazeuse. La solution absorbante enrichie en composés acides 3 est introduite dans l'échangeur de chaleur E1, où elle est réchauffée par le flux 6 provenant de la colonne de régénération C2. La solution 5 réchauffée en sortie de E1 est introduite dans la colonne de régénération C2.

La colonne de régénération C2 est équipée d'internes de mise en contact entre gaz et liquide, par exemple des plateaux, des garnissages en vrac ou structurés. Le fond de la colonne C2 est équipé d'un rebouilleur R1 qui apporte la chaleur nécessaire à la régénération en vaporisant une fraction de la solution absorbante. Dans la colonne C2, sous l'effet de la mise en contact de la solution absorbante arrivant par 5 avec la vapeur produite par le rebouilleur, les composés acides sont libérés sous forme gazeuse et évacués en tête de C2 par le conduit 7. La solution absorbante régénérée 6, c'est-à-dire appauvrie en composés acides 6 est refroidie dans E1, puis recyclée dans la colonne d'absorption C1 par le conduit 4.

L'étape de régénération du procédé selon l'invention peut être réalisée par régénération thermique, éventuellement complétée par une ou plusieurs étapes de détente.

La régénération peut être effectuée à une pression dans C2 comprise entre 1 bar et 5 bar, voire jusqu'à 10 bar et à une température dans C2 comprise entre 100°C et 180°C, de préférence comprise entre 130°C et 170°C. De manière préférée, la température de régénération dans la colonne de régénération C2 est comprise entre 155°C et 180°C dans le cas où l'on souhaite réinjecter les gaz acides. De manière préférée, la température de régénération dans la colonne de régénération C2 est comprise entre 115°C et 130°C dans les cas où le gaz acide est envoyé à l'atmosphère ou dans un procédé de traitement aval, comme un procédé Claus ou un procédé de traitement de gaz de queue.

Avantageusement, le procédé selon l'invention permet de réduire les besoins énergétiques pour la régénération de la solution absorbante, dans la mesure où l'amélioration de la sélectivité diminue la quantité de $CO_2$ captée, la chaleur d'absorption du $CO_2$ étant généralement comprise entre 50 et 80 kJ/mole.

Composition de la solution absorbante

Selon l'invention, la viscosité dynamique de la solution absorbante est ajustée par l'addition d'un composé viscosifiant, dont la concentration permet de contrôler la sélectivité du procédé par le contrôle de la viscosité dynamique de la solution absorbante.

La solution absorbante selon l'invention comprend:

(a) de l'eau;

(b) au moins la diamine 1,2-bis-(2-diméthylaminoéthoxy)-éthane

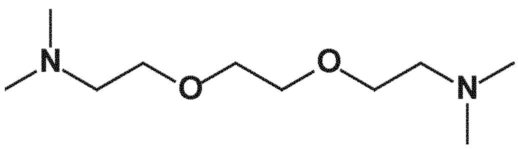

c) un ou plusieurs composés viscosifiants, grâce auxquels on contrôle la sélectivité de l'absorption de l'$H_2S$ par rapport au $CO_2$. Ledit composé viscosifiant permet une augmentation d'au moins 20 %, de préférence d'au moins 40 %, et encore de préférence d'au moins 80 %, de la viscosité dynamique d'une solution aqueuse avec au moins un composé azoté (b) tel que décrit plus haut, à une concentration d'amine et à une température donnée, la concentration du composé viscosifiant étant inférieure à 20 % en poids de la solution absorbante, de manière préférée inférieure à 5 % en poids, de manière plus préférée inférieure à 1 % en poids, de manière encore plus préférée inférieure à 0,3 % en poids.

Les composés viscosifiants sont des molécules qui doivent leurs propriétés à leurs structures chimiques et physicochimiques particulières. Ces propriétés sont le fruit de la nature chimique intrinsèque de ces molécules, c'est-à-dire de la nature et du nombre des fonctions chimiques qui les constituent ainsi que de leur position dans la molécule, mais aussi du caractère stéréochimique de ces molécules, par exemple leurs tailles et de leurs formes, et notamment la manière dont elles se déploient et dont elles s'associent lorsqu'elles sont solvatées.

Ces composés peuvent être des molécules ou des mélanges de molécules monofonctionnelles, polyfonctionnelles, multifonctionnelles, des oligomères ou des polymères linéaires, branchés, ramifiés ou dendritiques. Lorsque ces additifs sont des polymères leurs masses molaires peuvent être comprises entre plusieurs centaines de Dalton et plusieurs millions de Dalton.

Leurs masses molaires sont de préférence comprises entre plusieurs milliers et plusieurs millions de Dalton, et encore plus préférentiellement comprises entre au moins 10 000 Dalton et plusieurs millions de Dalton, par exemple de 10 000 à 1 million de Dalton.

Lorsque ces additifs sont des polymères, ils peuvent être constitués à partir d'un seul monomère ou de plusieurs monomères différents.

Pour constituer les polymères, ces monomères peuvent être répartis de manière aléatoire ou par blocs dans les chaînes polymères.

Les monomères constituants les polymères relevant de l'invention peuvent être porteurs d'une ou plusieurs fonctions choisies par exemple, de façon non limitative, parmi les alcools, les éthers, les polyéthers, les acides et leurs sels, les esters, les amides, les amides N- substitués, les sels d'ammonium, les sels d'amidoalkylammonium, les sels de phosphonium, les amines, les sulfonates, les phosphonates, les phosphates, les carboxybétaïnes, les sulfobétaïnes, les phosphobétaïnes. Les monomères peuvent renfermer des chaînes hydrocarbonées linéaires ou ramifiées, des cycles aromatiques ou non, des hétérocycles, des groupements soufrés, silylés ou halogénés, notamment fluorés. Les monomères peuvent comprendre des groupements appartenant à la famille générale des carbohydrates. Les monomères peuvent appartenir à la famille des macromonomères. Les fonctions apportées par les monomères peuvent avoir la faculté de s'associer ou de se repousser entre elles ou avec le milieu constituant le solvant.

Les composés viscosifiants peuvent être choisis dans le groupe constitué par les composés suivants:

- les polyéthers et leurs copolymères, tels que les polyéthylèneglycols, les polypropylèneglycols, les copolymères de l'oxyde d'éthylène avec d'autres époxyalcanes tels que par exemple l'oxyde de propylène, ces différents polymères ou copolymères pouvant être modifiés par des motifs hydrophobes.

Les composés viscosifiants peuvent être des polyélectrolytes, et présenter un caractère anionique, cationique, ou zwitterionique. Le caractère anionique peut être présent à travers par exemple des fonctions carboxylates, sulfonates, sulfates, phosphates ou phosphonates associées à un cation inorganique ou organique. Le caractère cationique peut par exemple être présent à travers des fonctions ammoniums ou phosphoniums associées à un anion organique ou inorganique. Les polyélectrolytes à caractère zwitterionique peuvent inclure des copolymères ayant des charges positives et négatives dans des blocs monomères séparés du squelette ou des polymères ou copolymères ayant des monomères zwitterioniques, c'est-à-dire portant une charge positive et négative sur le même monomère.

Les composés viscosifiants peuvent être utilisés seuls ou en association entre eux.

Les exemples de composés cités sont donnés de manière non limitative, et l'homme du métier peut choisir tout autre composé viscosifiant (c) de nature à contrôler la sélectivité de l'absorption de l'$H_2S$ relativement au $CO_2$ par adjonction dudit composé à une solution aqueuse contenant au moins une amine tertiaire ou une amine secondaire encombrée.

Selon encore un autre mode réalisation de l'invention, le composé viscosifiant ajouté à la solution absorbante est un polyéthylèneglycol. De préférence, on ajoute moins de 20 % en poids de la solution absorbante, de préférence moins de 5 % en poids, de manière plus préférée moins de 1 % en poids, et de manière encore plus préférée moins de 0.3 % en poids, du polyéthylèneglycol à la solution absorbante.

Le 1,2-bis(2-diméthylaminoéthoxy)éthane peut être préparé par toutes les voies de synthèses permises par la chimie organique. La figure 2 illustre de manière non exhaustive certaines de ces voies.

Le 1 ,2-bis-(2-diméthylaminoéthoxy)-éthane peut être obtenu par réaction de la diméthylamine sur le triéthylèneglycol selon une réaction de condensation bien connue (réaction 2). Cette réaction peut par exemple s'effectuer en présence d'hydrogène et d'un catalyseur approprié dans des conditions abondamment citées dans la littérature.

Le triéthylèneglycol qui est le précurseur dans cette réaction est généralement obtenu par trimérisation de l'oxyde d'éthylène selon une réaction conventionnelle d'ouverture de cycle en présence d'une molécule d'eau (réaction 1). Le triéthylèneglycol est un composé industriel abondant et peu onéreux.

Les composés répondant à la formule générale peuvent être également obtenus d'abord par la réaction de l'ammoniac sur le triéthylèneglycol selon une réaction de condensation bien connue (réaction 3) conduisant au 1,2-bis(2-aminoéthoxy)éthane appelé aussi 1,8-diamino-3,6-dioxaoctane, les fonctions amines primaires de ce dernier étant ensuite N-alkylées par réaction de formaldéhyde en présence d'hydrogène et à l'aide en général d'un catalyseur approprié (réaction 4) dans des conditions abondamment citées dans la littérature.

Les composés répondant à la formule générale peuvent être également obtenus d'abord par la réaction d'halogénation par exemple de chloration du triéthylèneglycol en 1,2-bis(2-chloroéthoxy)éthane (réaction 5) avec un agent de chloration conventionnel tel par exemple l'acide chlohydrique ou le chlorure de thionyle, puis ensuite par une réaction de condensation (réaction 6) avec de la diméthylamine.

Les composés répondant à la formule générale peuvent être également obtenus par réaction de condensation du diméthylamino-2-éthanol avec un 1,2-dihalogénoéthane tel le 1,2-dichloroéthane (réaction 7) ou encore par réaction de condensation d'un diméthylamino-2-halogénoéthane tel un 2-chloro-N,N-diméthyléthylamine éventuellement sous forme d'halogénohydrate avec de l'éthylène glycol (réaction 8).

Selon l'invention, la solution peut comprendre :

- entre 10 % et 90 % en poids, de préférence entre 20 % et 60 % poids, de manière très préférée entre 25 % et 50 % poids, de 1,2-bis-(2-diméthylaminoéthoxy)-éthane (b);
- et entre 10 % et 90 % en poids, de préférence entre 40 % et 80 % en poids, de manière très préférée entre 50 % à 75 % en poids d'eau (a);
- et entre 0,01 % en poids et 20 % en poids du composé viscosifiant (c).

Selon un mode de réalisation, la solution peut comporter une amine supplémentaire, ladite amine supplémentaire étant une amine tertiaire, telle que la méthyldiéthanolamine, ou une amine secondaire présentant deux carbones tertiaires en alpha de l'azote de la fonction amine secondaire, ou une amine secondaire présentant au moins un carbone quaternaire en alpha de l'azote de la fonction amine secondaire. Dans ce cas, la solution peut comporter entre 10% et 90% poids de ladite amine supplémentaire, de préférence entre 10% et 50% poids, de manière très préférée entre 10% et 30% poids.

Selon l'invention, la solution peut comporter un solvant physique choisi parmi le méthanol et le sulfolane.

Nature des effluents gazeux

La solution absorbante peut être utilisée pour désacidifier les effluents gazeux suivants : le gaz naturel, les gaz de synthèse, les gaz de raffinerie, les gaz acides issus d'une unité aux amines, les gaz issus d'une unité de réduction en queue du procédé Claus, les gaz de fermentation de biomasse, les gaz de cimenterie. Ces effluents gazeux contiennent un ou plusieurs des composés acides suivants : le $CO_2$, l'$H_2S$, des mercaptans, du COS, du $CS_2$, le $SO_2$.

Le procédé selon l'invention peut être mis en oeuvre pour éliminer sélectivement l'$H_2S$ d'un gaz de synthèse. Le gaz de synthèse contient du monoxyde de carbone CO, de l'hydrogène $H_2$ (généralement dans un ratio $H_2$/CO égal à 2), de la vapeur d'eau (généralement à saturation à la température mise en oeuvre lors de l'étape d'absorption) et du dioxyde de carbone $CO_2$ (de l'ordre de la dizaine de %). La pression est généralement comprise entre 20 bar et 30 bar, mais peut atteindre jusqu'à 70 bar. Il contient, en outre, des impuretés soufrées ($H_2S$, COS, etc.), azotées ($NH_3$, HCN) et halogénées.

Le procédé selon l'invention peut être mis en oeuvre pour éliminer sélectivement l'$H_2S$ d'un gaz naturel. Le gaz naturel est constitué majoritairement d'hydrocarbures gazeux, mais peut contenir plusieurs des composés acides suivants : le $CO_2$, l'$H_2S$, des mercaptans, du COS, du $CS_2$. La teneur de ces composés acides est très variable et peut aller jusqu'à 40% pour le $CO_2$ et l'$H_2S$. La température du gaz naturel peut être comprise entre 20°C et 100°C. La pression du gaz naturel à traiter peut être comprise entre 10 bar et 120 bar. L'invention peut être mise en oeuvre pour atteindre des spécifications généralement imposées sur le gaz désacidifié, qui sont 2% de $CO_2$ dans le cas d'une application sélective, de 4 ppm d'$H_2S$, et de 10 à 50 ppm volume de soufre total.

## Exemples

### Exemple 1 : Calcul d'un absorbeur à garnissage

On met en oeuvre l'étape d'absorption du procédé selon l'invention pour traiter un gaz naturel dont la pression à l'entrée de l'absorbeur est de 71,9 bar et la température de 31,2°C. La composition molaire à l'entrée de l'absorbeur est la suivante : 85 % mol de méthane, 4,9 %mol d'éthane, 1,41 % de propane, 0,26 % d'isobutane, 0,59 % de n-butane, 0,15 % d'isopentane, 0,30 % de n-pentane et 0,14 % de n-hexane. Le gaz contient par ailleurs 0,09 % d'eau, 2,53 % d'azote ainsi 2,13 % de $CO_2$ et 2,49 % d'$H_2S$. Les spécifications pour le gaz traité sont de 2 ppmv pour $H_2S$ et 2 % molaire pour le $CO_2$. Une sélectivité d'élimination de l'$H_2S$ vis à vis du $CO_2$ maximale est donc requise.

Le gaz brut à un débit de 19 927 kmole/h est mis en contact à contre-courant avec une solution aqueuse d'amine dans un absorbeur rempli de garnissage structuré développant une aire interfaciale de 232 $m^2/m^3$. La température de la solution d'amine régénérée en tête d'absorbeur est de 44,6°C. L'absorbeur est modélisé par 18 plateaux réels, sur chacun desquels les flux de gaz acides sont calculés en utilisant l'approche du double film. Un calcul itératif permet de résoudre les bilans matière et thermique plateau par plateau et de calculer pour une hauteur de garnissage donnée les profils de concentration en gaz acide et en température dans l'absorbeur.

Pour le cas de référence, on calcule la performance d'une solution de MDEA à 46.8% totalement régénérée alimentant l'absorbeur à un débit de 400 $Sm^3/h$.

Selon l'art antérieur, on peut mettre en oeuvre différentes amines tertiaires ou secondaires encombrées, notamment certaines molécules préférées dont la sélectivité est revendiquée dans les brevets US 4,405,581, US4,405,582 et US4,483,833. Leur performance est comparée sur ce cas d'étude à la solution de MDEA de référence. L'ensemble des propriétés physico-chimiques nécessaires à la simulation ont été obtenues au laboratoire.

Selon notre invention, on conserve une concentration en 1,2-bis-(2-diméthylaminoéthoxy)-éthane de 50% en augmentant de 40% sa viscosité par l'effet d'un additif viscosifiant selon l'invention. Ajouté en quantité très faible, de

préférence à moins de 1 % en poids, cet additif augmente la viscosité sans modifier les équilibres liquide-vapeur ou la cinétique intrinsèque de réaction avec le $CO_2$ déterminées au laboratoire. Le seul paramètre d'ajustement du calcul est donc la viscosité de la solution aqueuse d'amine. Pour chaque étage réel, la viscosité de la solution avec viscosifiant est calculée en multipliant la valeur de la viscosité de la solution de référence par un facteur 1,4. Un effet inversement proportionnel de la viscosité sur les coefficients de diffusion en phase liquide, ainsi que les effets de la viscosité sur les paramètres de transfert propres au garnissage sont également pris en compte dans le calcul. Le même calcul est réalisé pour des solutions de MDEA à 46.8% et les solutions d'amines selon l'art antérieur dont les concentrations sont fixées à 50%poids et dont les viscosités respectives sont augmentées du même facteur 1,4.

L'absorbeur est dimensionné en ajustant le débit et la hauteur de garnissage nécessaire permettant d'atteindre la spécification requise de 2ppmv $H_2S$ dans le gaz traité et la sélectivité d'absorption maximale vis-à-vis de l'$H_2S$. On obtient pour chaque formulation la hauteur de garnissage correspondante ainsi que la concentration en $CO_2$ dans le gaz traité. La sélectivité d'absorption de $H_2S$ vis-à-vis du $CO_2$ est définie par le rapport des rendements d'élimination des deux gaz :

$$S = \frac{\eta_{H_2S}}{\eta_{CO_2}}$$

Ces rendements d'élimination sont définis respectivement par

$$\eta_{H_2S} = 1 - \frac{F_{Gaz\,traité} \times y_{Gaz\,traité}^{H_2S}}{F_{Gaz\,brut} \times y_{Gaz\,brut}^{H_2S}} \quad \text{et} \quad \eta_{CO_2} = 1 - \frac{F_{Gaz\,traité} \times y_{Gaz\,traité}^{CO_2}}{F_{Gaz\,brut} \times y_{Gaz\,brut}^{CO_2}}$$

Dans ces expressions, F désigne le débit molaire de gaz acide, brut ou traité; y désigne la fraction molaire en gaz acide, $H_2S$ ou $CO_2$.

Le tableau 1 ci-dessous compare les résultats obtenus par calcul pour les différentes formulations de MDEA à 46,8 % en poids, des amines selon l'art antérieur à 50%, des mêmes formulations dont la viscosité a été augmentée d'un facteur 1,4 et de la formulation selon l'invention dont la viscosité est également augmentée d'un facteur 1,4 par rapport à la même formulation sans additif viscosifiant.

**Tableau 1**

| | **Yco$_2$ sortie** % vol | **Sélectivité** | **Gain sélectivité** | Débit Solvant **(m$^3$/h)** | **Volume garnissage (m$^3$)** |
|---|---|---|---|---|---|
| **1** - MDEA 46.8% Référence sans viscosifiant | 1,62 | **3,8** | **ref.** | 400 | 33,9 |
| **2** - MDEA 46.8% et viscosifiant Viscosité x 1.4 | 1,70 | **4,4** | **16%** | 400 | 34,6 |
| **3** - ter-butyléthanolamine 50% selon US4,405,581 | 1,31 | **2,5** | **-35%** | 200 | 28,4 |
| **4** - ter-butyléthanolamine 50% et viscosifiant Viscosité x 1.4 | 1,41 | **2,8** | **-27%** | 200 | 29,5 |
| **5** - N-(2-hydroxyéthyl)pyrolidine 50% selon US 4,483,833 | 0,95 | **1,8** | **-54%** | 250 | 28,9 |
| **6** - N-(2-hydroxyéthyl)pyrolidine 50% et viscosifiant Viscosité x 1.4 | 1,09 | **2,0** | **-48%** | 250 | 28,9 |
| **7** - 1 ,2-bis-(2-pyrolidinoéthoxy)-éthane 50% selon US 4,405,582 | 1,60 | **3,7** | **-3%** | 200 | 31,1 |
| **8**- 1 ,2-bis-(2-pyrolidinoéthoxy)-éthane 50% et viscosifiant Viscosité x 1.4 | 1,70 | **4,4** | **16%** | 200 | 32,1 |
| **9**- 1 ,2-bis-(2-diméthylaminoéthoxy)-éthane 50% selon US 4,405,582 | 1,68 | **4,2** | **12%** | 200 | 29,0 |

(suite)

| | $Yco_2$ sortie % vol | Sélectivité | Gain sélectivité | Débit Solvant ($m^3/h$) | Volume garnissage ($m^3$) |
|---|---|---|---|---|---|
| **10**- 1 ,2-bis-(2-diméthylaminoéthoxy)-éthane 50% - et viscosifiant Viscosité x 1.4 selon l'invention | 1,75 | **4,9** | **30%** | 200 | 30,0 |

Cet exemple illustre le gain en sélectivité apporté par le procédé selon l'invention, dans lequel la sélectivité est contrôlée par l'ajout d'un composé viscosifiant dont la concentration permet d'ajuster la viscosité d'une solution de 1 ,2-bis-(2-diméthylaminoéthoxy)-éthane.

Ainsi la formulation selon l'invention, permettant d'augmenter d'au moins 40% la valeur de la viscosité dynamique par rapport à la solution de 1 ,2-bis-(2-diméthylaminoéthoxy)-éthane selon le brevet US 4,405,582, permet, dans cet exemple, une augmentation d'au moins 30% de la sélectivité par rapport à la solution de référence à base de méthyldiéthanolamine.

La même solution de MDEA également additionnée d'un composé viscosifiant permettant d'augmenter de 40% présente une augmentation de 16% de la sélectivité, qui reste en deçà de l'amélioration apportée par l'invention.

L'invention permet également une réduction du débit de solvant circulant dans le procédé, cette réduction atteignant 50% dans cet exemple. Elle permet également de réduire le volume de garnissage nécessaire pour réaliser la spécification requise en $H_2S$.

Le gain en sélectivité apporté par la solution de 1 ,2-bis-(2- diméthylaminoéthoxy)-éthane selon le brevet US 4,405,582 (12%) est également en deçà du gain apporté par l'invention et de celui apporté par une solution de MDEA additionnée d'un composé permettant d'augmenter sa viscosité de 40%.

La formulation selon l'invention se distingue également d'autres formulations de diaminoéthers selon le brevet US 4,405,582, comme le 1 ,2-bis-(2- pyrolidinoéthoxy)-éthane dont les sélectivités atteintes sont sensiblement équivalentes à celles de la MDEA, avec ou sans viscosifiant.

Elle se distingue encore d'autres formulations de diaminoéthers selon l'art antérieur, par exemple la ter-butyléthanolamine 50%pds selon le brevet US 4,405,581 ou la N-(2-hydroxyéthyl)pyrolidine 50%pds selon le brevet US 4,483,833. Avec ou sans viscosifiant, ces formulations conduisent à des sélectivités nettement inférieure à celles de la MDEA et a fortiori, à celles de l'invention.

La mise en oeuvre du procédé selon l'invention ici décrite permet donc un contrôle et une amélioration de la sélectivité de manière efficace et inattendue par rapport à l'antérieur.

**Exemple 2 : Mesures de viscosité dynamique d'une formulation selon l'invention**

On mesure la viscosité dynamique de différentes solutions aqueuses d'amine à 40°C à l'aide d'un viscosimètre automatique de type AMVn Anton Paar, fonctionnant selon le principe du viscosimètre d'Hoepler. La viscosité est déduite de la mesure du temps de chute d'une bille dans un capillaire de diamètre 1,6 mm incliné d'un angle de 80°, conformément aux normes DIN 53015 et ISO 12058, ainsi que de la mesure de densité mesurée sur un densimètre Anton Paar DMA 4100 à 40°C.

Ces mesures réalisées à 40°C permettent de mettre en évidence l'effet viscosifiant des différents composés mis en oeuvre selon l'invention tel que l'impact de cet effet viscosifiant sur la sélectivité a été illustré dans l'exemple 1.

A titre d'exemple, on compare les viscosités dynamiques d'une formulation selon l'invention, contenant 50% en poids de 1,2-bis-(2-diméthylaminoéthoxy)-éthane (b) et 1%poids de composé viscosifiant (c), ainsi que d'une solution contenant 47% en poids de méthyldiéthanolamine (MDEA) et 1% en poids du même composé viscosifiant avec celles des solutions aqueuses, contenant respectivement 50% en poids de 1 ,2-bis-(2-diméthylaminoéthoxy)-éthane et 47% en poids de méthyldiéthanolamine (MDEA) sans additif viscosifiant.

Le composé (c) désigné par PEG 35000 est un polyéthylène glycol de masse molaire moyenne en poids égale à 35000 g/mole.

**Tableau 2**

| Composé (b) | % poids | Composé (c) | % poids | Viscosité à 40°C (mPas) | Gain en viscosité (%) |
|---|---|---|---|---|---|
| MDEA | 47,0 | - | - | 4,5 | - |
| MDEA | 47,0 | PEG 35000 | 1 | 7,1 | 60 |

(suite)

| Composé (b) | % poids | Composé (c) | % poids | Viscosité à 40°C (mPas) | Gain en viscosité (%) |
|---|---|---|---|---|---|
| 1 ,2-bis-(2-diméthylaminoéthoxy)-éthane | 50,0 | - | - | 6,1 | - |
| 1 ,2-bis-(2-diméthylaminoéthoxy)-éthane | 50,0 | PEG 35000 | 1 | 8,7 | 43 |

Cet exemple illustre un composé (c) permettant d'augmenter la viscosité d'une solution aqueuse de MDEA ou de 1,2-bis-(2-diméthylaminoéthoxy)-éthane selon l'invention d'au moins 40 % en ajoutant moins de 20 % dudit composé à la formulation. Cet effet est observable pour des concentrations inférieures ou égales à 1 % en poids pour le PEG 35000.

**Exemple 3 : Vitesse d'absorption du $CO_2$ d'une formulation selon l'invention**

On effectue un essai comparatif d'absorption du $CO_2$ par une solution absorbante selon l'invention, contenant 30 % en poids de 1,2-bis-(2-diméthylaminoéthoxy)-éthane (b) selon l'invention et 6 % poids de PEG 35000, polyéthylène glycol de masse molaire moyenne en poids égale à 35000 g/mole, composé viscosifiant selon l'invention (c), par rapport:

- à une solution aqueuse contenant 30 % en poids de 1,2-bis-(2-diméthylaminoéthoxy)-éthane sans composé viscosifiant d'une part, et
- par rapport à une solution aqueuse de N-méthyldiéthamolamine (MDEA) à 47 % en poids en MDEA, qui constitue le solvant de référence pour une élimination sélective en traitement de gaz d'autre part.

Les solutions sont préchargées en $CO_2$ à un taux de charge de 0,35 mole $CO_2$ par mole d'amine. Avant la mesure de vitesse d'absorption, on détermine les viscosités dynamiques les solutions aqueuses préchargées en $CO_2$, ces mesures étant réalisées à 50°C à l'aide d'un viscosimètre automatique de type AMVn Anton Paar, comme décrit dans l'exemple précédent.

Pour chaque essai, on mesure le flux d'absorption du $CO_2$ par la solution aqueuse préchargée en $CO_2$ dans un réacteur fermé, type cellule de Lewis dans lequel les phases gaz et liquides sont parfaitement agitées et séparées par une interface plane. 200 g de solution est introduite dans le réacteur fermé, régulé à une température de 50°C. On réalise cinq injections successives de $CO_2$ de 100 à 200 mbar dans la phase vapeur du réacteur ayant un volume de 200 $cm^3$. La phase gaz et la phase liquide sont agitées à 100 tours/minutes et entièrement caractérisées du point de vue hydrodynamique. Pour chaque injection, on mesure la vitesse d'absorption du $CO_2$ par variation de pression dans la phase gaz. On détermine ainsi un coefficient de transfert global Kg par une moyenne des résultats obtenus sur les 5 injections.

Les résultats obtenus sont présentés dans le tableau 3 ci-dessous en vitesse d'absorption relative à la formulation de référence N-méthyldiéthamolamine (MDEA) à 47 % poids en MDEA, cette vitesse d'absorption relative étant définie par le rapport du coefficient de transfert global du solvant sur le coefficient de transfert global de la formulation de référence.

**- Tableau 3 -**

| Amine | % poids de l'amine | Composé viscosifiant (c) | % poids du composé viscosifiant (c) | Viscosité à 50°C (mPas) | Vitesse d'absorption relative du $CO_2$ à 50°C |
|---|---|---|---|---|---|
| MDEA | 47 | - | - | 4,1 | 1,00 |
| 1,2-bis-(2-diméthylaminoétho xy)-éthane selon US 4,405,582 | 30 | - | - | 2,0 | 1,01 |
| 1,2-bis-(2-diméthylaminoétho xy)-éthane | 30 | PEG 35000 | 6 | 13,3 | 0,75 |

L'examen des résultats fait ressortir, dans ces conditions de test, une vitesse d'absorption du $CO_2$ par la solutions absorbantes selon l'invention plus lente par rapport à la formulation de référence MDEA, et par rapport à une

solution de 1,2-bis-(2-diméthylaminoéthoxy)-éthane selon l'art antérieur en cohérence avec l'augmentation de viscosité par rapport à la solution de 1,2-bis-(2-diméthylaminoéthoxy)-éthane sans viscosifiant. Il apparaît donc que la solution selon l'invention comportant un composé viscosifiant, étant ici le PEG 35000, présente un intérêt particulier et une amélioration dans le cas de l'élimination sélective du sulfure d'hydrogène d'un effluent gazeux contenant du $CO_2$, dans laquelle on cherche à limiter la cinétique d'absorption du $CO_2$.

## Revendications

1. Procédé d'élimination sélective du sulfure d'hydrogène contenu dans un effluent gazeux comprenant du $CO_2$, dans lequel on effectue une étape d'absorption sélective du sulfure d'hydrogène par rapport au $CO_2$ en mettant en contact ledit effluent avec une solution absorbante comprenant (a) de l'eau et (b) au moins du 1,2-bis-(2- diméthylaminoéthoxy)-éthane, **caractérisé en ce que** l' on contrôle la sélectivité de l'absorption du sulfure d'hydrogène par rapport au $CO_2$ en ajoutant une quantité égale à moins de 20 % en poids de la solution absorbante d'un composé viscosifiant (c) à ladite solution absorbante, de manière à augmenter la viscosité dynamique de la solution absorbante d'au moins 20 % par rapport à une même solution absorbante sans ledit composé viscosifiant, ladite quantité du composé viscosifiant (c) étant ajustée afin d'obtenir la sélectivité souhaitée, et ledit composé viscosifiant (c) étant choisi dans le groupe constitué par les polyéthers et leurs copolymères.

2. Procédé selon la revendication 1, dans lequel on contrôle la sélectivité de l'absorption du sulfure d'hydrogène par rapport au $CO_2$ en ajoutant moins de 5 % en poids, plus préférentiellement moins de 1 % en poids, encore plus préférentiellement moins de 0,3 % en poids, d'un composé viscosifiant à la solution absorbante de manière à augmenter la viscosité dynamique de la solution absorbante d'au moins 20 %, de préférence d'au moins 40 %, plus préférentiellement d'au moins 80 %, par rapport à une même solution absorbante sans ledit composé viscosifiant.

3. Procédé selon l'une quelconque des revendications 1 et 2, dans lequel ledit composé viscosifiant est un polyéthylèneglycol.

4. Procédé selon l'une quelconque des revendications précédentes, dans lequel la solution absorbante comprend entre 10 % et 90 % en poids de 1,2-bis-(2-diméthylaminoéthoxy)-éthane (b), entre 10 % et 90 % en poids d'eau (a), et entre 0,01 % en poids et 20 % en poids du composé viscosifiant (c).

5. Procédé selon l'une des revendications précédentes, dans lequel la solution absorbante comporte une amine supplémentaire, ladite amine supplémentaire étant une amine tertiaire, telle que la méthyldiéthanolamine, ou une amine secondaire présentant deux carbones tertiaires en alpha de l'azote de la fonction amine secondaire, ou une amine secondaire présentant au moins un carbone quaternaire en alpha de l'azote de la fonction amine secondaire.

6. Procédé selon la revendication 5, dans lequel la solution absorbante comporte entre 10% et 90% poids de ladite amine supplémentaire, de préférence entre 10% et 50% poids, de manière très préférée entre 10% et 30% poids.

7. Procédé selon l'une quelconque des revendications précédentes, dans lequel la solution absorbante comprend en outre un solvant physique choisi parmi le méthanol et le sulfolane.

8. Procédé selon l'une quelconque des revendications précédentes, dans lequel l'étape d'absorption sélective est réalisée à une pression comprise entre 1 bar et 120 bar, et à une température comprise entre 20°C et 100°C.

9. Procédé selon l'une quelconque des revendications précédentes, dans lequel, après l'étape d'absorption, on obtient un effluent gazeux appauvri en composés acides et une solution absorbante enrichie en composés acides, et dans lequel on effectue au moins une étape de régénération de la solution absorbante chargée en composés acides.

10. Procédé selon la revendication 9, dans lequel l'étape de régénération est réalisée à une pression comprise entre 1 bar et 10 bar et une température comprise entre 100°C et 180°C.

11. Procédé selon l'une quelconque des revendications précédentes, dans lequel l'effluent gazeux est choisi parmi le gaz naturel, les gaz de synthèse, les gaz de raffinerie, les gaz acides issus d'une unité aux amines, les gaz issus d'une unité de réduction en queue du procédé Claus, les gaz de fermentation de biomasse, les gaz de cimenterie.

12. Procédé selon l'une quelconque des revendications précédentes, dans lequel l'effluent gazeux est du gaz naturel

ou un gaz de synthèse.

## Patentansprüche

1. Verfahren zur selektiven Entfernung von Schwefelwasserstoff, der in einem $CO_2$ enthaltenden gasförmigen Abstrom enthalten ist, wobei ein Schritt der selektiven Absorption von Schwefelwasserstoff gegenüber $CO_2$ durch Inkontaktbringen des Abstroms mit einer Absorptionslösung durchgeführt wird, die (a) Wasser und (b) mindestens 1,2-Bis(2-dimethylaminoethoxy)ethan umfasst, **dadurch gekennzeichnet, dass** die Selektivität der Schwefelwasserstoffabsorption gegenüber $CO_2$ gesteuert wird durch Zugabe einer Menge einer viskos machenden Verbindung (c), die weniger als 20 Gew.-% der Absorptionsmittellösung entspricht, zu der Absorptionslösung, um die dynamische Viskosität der Absorptionslösung um mindestens 20% zu erhöhen in Bezug auf eine gleiche Absorptionslösung ohne die viskos machende Verbindung, wobei die Menge der viskos machenden Verbindung (c) eingestellt wird, um die gewünschte Selektivität zu erhalten, und wobei die viskos machende Verbindung (c) ausgewählt wird aus der Gruppe, bestehend aus Polyethern und deren Copolymeren.

2. Verfahren nach Anspruch 1, bei dem die Selektivität der Absorption von Schwefelwasserstoff gegenüber $CO_2$ durch Zugabe von weniger als 5 Gew.-%, besonders bevorzugt weniger als 1 Gew.-%, insbesondere weniger als 0,3 Gew.-% einer viskos machenden Verbindung zu der Absorptionslösung gesteuert wird, um die dynamische Viskosität der Absorptionslösung um mindestens 20%, vorzugsweise um mindestens 40%, besonders bevorzugt um mindestens 80% zu erhöhen, in Bezug auf die gleiche Absorptionslösung ohne die viskos machende Verbindung.

3. Verfahren nach einem der Ansprüche 1 und 2, wobei die viskos machende Verbindung ein Polyethylenglykol ist.

4. Verfahren nach einem der vorherigen Ansprüche, wobei die Absorptionslösung zwischen 10 und 90 Gew.-% 1,2-Bis(2-dimethylaminoethoxy)ethan (b), zwischen 10 und 90 Gew.-% Wasser (a) und zwischen 0,01 Gew.-% und 20 Gew.-% der viskos machenden Verbindung (c) umfasst.

5. Verfahren nach einem der vorherigen Ansprüche, wobei die Absorptionslösung ein zusätzliches Amin umfasst, wobei das zusätzliche Amin ein tertiäres Amin, wie etwa Methyldiethanolamin, oder ein sekundäres Amin mit zwei tertiären Kohlenstoffatomen am Alpha-Stickstoff der sekundären Aminfunktion ist oder ein sekundäres Amin mit mindestens einem quartären Kohlenstoff am Alpha-Stickstoff der sekundären Aminfunktion.

6. Verfahren nach Anspruch 5, wobei die Absorptionslösung zwischen 10 und 90 Gew.-% des zusätzlichen Amins umfasst, vorzugsweise zwischen 10 und 50 Gew.-%, besonders bevorzugt zwischen 10 und 30 Gew.-%.

7. Verfahren nach einem der vorherigen Ansprüche, wobei die Absorptionslösung ferner ein physikalisches Lösemittel umfasst, ausgewählt aus Methanol und Sulfolan.

8. Verfahren nach einem der vorherigen Ansprüche, wobei der selektive Absorptionsschritt bei einem Druck zwischen 1 bar und 120 bar und bei einer Temperatur zwischen 20 °C und 100 °C erfolgt.

9. Verfahren nach einem der vorherigen Ansprüche, wobei nach dem Absorptionsschritt ein gasförmiger Abstrom, der an sauren Verbindungen abgereichert ist, und eine mit sauren Verbindungen angereicherte Absorptionslösung erhalten werden, und wobei mindestens ein Regenerationsschritt der mit sauren Verbindungen beladenen Absorptionslösung erfolgt.

10. Verfahren nach Anspruch 9, wobei der Regenerationsschritt bei einem Druck zwischen 1 bar und 10 bar und einer Temperatur zwischen 100 °C und 180 °C erfolgt.

11. Verfahren nach einem der vorherigen Ansprüche, wobei der gasförmige Abstrom ausgewählt wird aus Erdgas, Synthesegasen, Raffineriegasen, sauren Gasen aus einer Aminierungseinheit, Gasen, die aus einer Reduktionseinheit am Ende des Claus-Prozesses stammen, Biomasse-Fermentationsgasen, Gasen aus der Zementindustrie.

12. Verfahren nach einem der vorherigen Ansprüche, wobei der gasförmige Abstrom Erdgas oder Synthesegas ist.

## Claims

1. A method of selectively removing hydrogen sulfide contained in a gaseous effluent comprising $CO_2$, wherein a stage of selective absorption of the hydrogen sulfide over the $CO_2$ is carried out by contacting said effluent with an absorbent solution comprising (a) water and (b) at least 1,2-bis(2-dimethylaminoethoxy)ethane, **characterized in that**:
the absorption selectivity of the hydrogen sulfide over the $CO_2$ is controlled by adding a proportion equal to less than 20 % by weight of the absorbent solution of a viscosifying compound (c) to said absorbent solution, so as to increase the dynamic viscosity of the absorbent solution by at least 20 % in relation to the same absorbent solution without said viscosifying compound, said proportion of said viscosifying compound (c) being adjusted so as to obtain the desired selectivity, said viscosifying compound (c) being selected from the group consisting of polyethers and their copolymers.

2. A method as claimed in claim 1, wherein the absorption selectivity of the hydrogen sulfide over the $CO_2$ is controlled by adding less than 5 wt.%, more preferably less than 1 wt.% and still more preferably less than 0.3 wt.% of a viscosifying compound to the absorbent solution so as to increase the dynamic viscosity of the absorbent solution by at least 20 %, preferably at least 40 % and more preferably at least 80 %, in relation to the same absorbent solution without said viscosifying compound.

3. A method as claimed in any one of claims 1 and 2, wherein said viscosifying compound is a polyethylene glycol.

4. A method as claimed in any one of the previous claims, wherein the absorbent solution comprises between 10 and 90 wt.% 1,2-bis-(2-dimethylaminoethoxy)ethane (b), between 10 and 90 wt.% water (a), and between 0.01 and 20 wt.% of viscosifying compound (c).

5. A method as claimed in any one of the previous claims, wherein the absorbent solution comprises an additional amine, said additional amine being a tertiary amine such as methyldiethanolamine, or a secondary amine with two tertiary carbons at nitrogen alpha position of the secondary amine function, or a secondary amine with at least one quaternary carbon at nitrogen alpha position of the secondary amine function.

6. A method as claimed in claim 5, wherein the absorbent solution comprises between 10 and 90 wt.% of said additional amine, preferably between 10 and 50 wt.%, and more preferably between 10 and 30 wt.%.

7. A method as claimed in any one of the previous claims, wherein the absorbent solution also comprises a physical solvent selected from among methanol and sulfolane.

8. A method as claimed in any one of the previous claims, wherein the selective absorption stage is carried out at a pressure ranging between 1 bar and 120 bars, and at a temperature ranging between 20°C and 100°C.

9. A method as claimed in any one of the previous claims wherein, after the absorption stage, a gaseous effluent depleted in acid compounds and an absorbent solution enriched in acid compounds are obtained, and wherein at least one stage of regenerating the absorbent solution laden with acid compounds is performed.

10. A method as claimed in claim 9, wherein the regeneration stage is carried out at a pressure ranging between 1 bar and 10 bars, and at a temperature ranging between 100°C and 180°C.

11. A method as claimed in any one of the previous claims, wherein the gaseous effluent is selected from among natural gas, syngas, refinery gas, acid gas from an amine unit, Claus tail gas, biomass fermentation gas, cement plant gas.

12. A method as claimed in any one of the previous claims, wherein the gaseous effluent is natural gas or syngas.

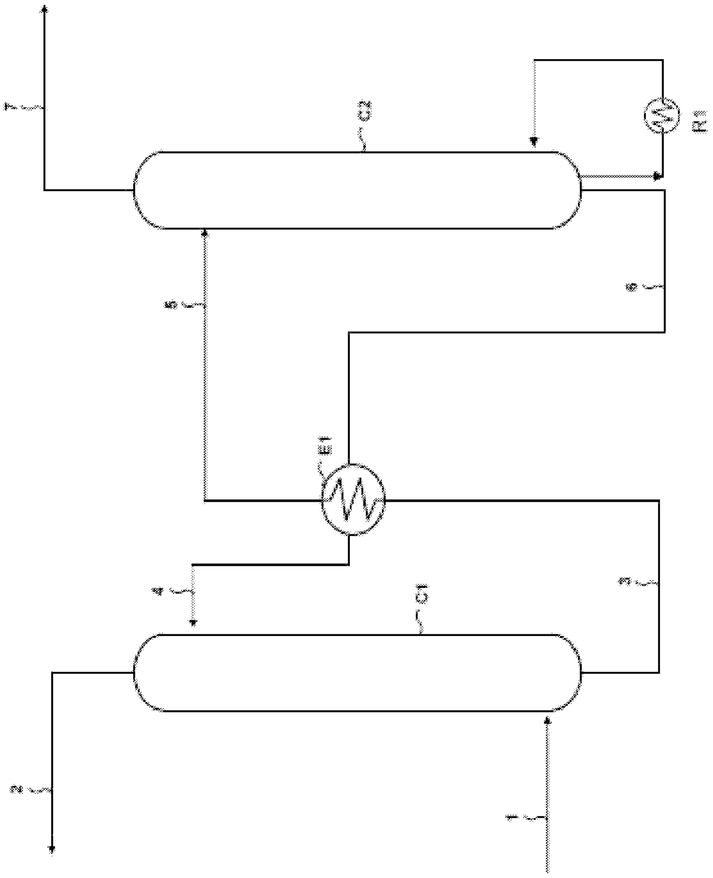


**Fig. 1**

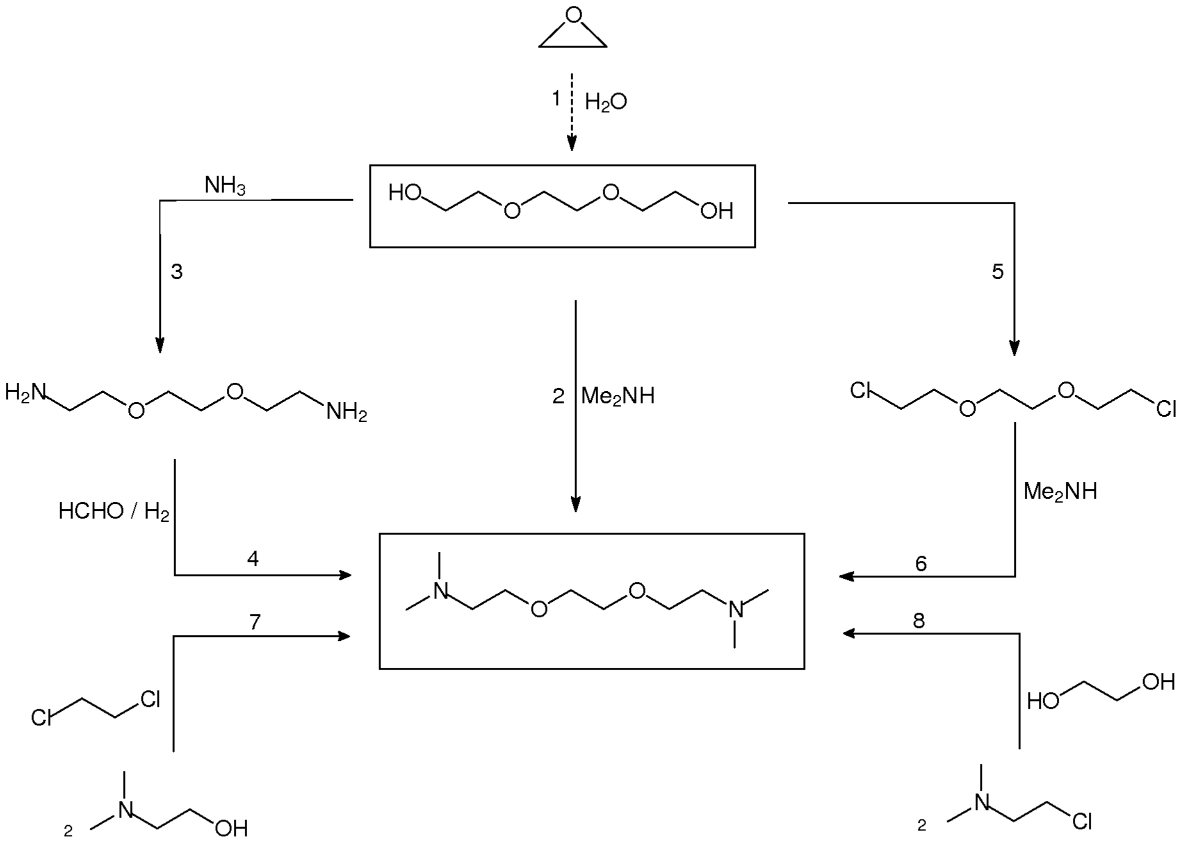


**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6852144 B
- US 4405581 A
- US 4405582 A
- EP 0087856 A
- US 4483833 A


### Littérature non-brevet citée dans la description


- **FRAZIER ; KOHL.** *Ind. and Eng. Chem.,* 1950, vol. 42, 2288
- Effets of polyhydroxyalcohols on COS absorption in aqueous MDEA. **LAMMERS et al.** The Chemical Engineering Journal. 1995, vol. 60, 123-29